# EUROPÄISCHE PATENTANMELDUNG

(11) **EP 1 918 248 A2**
(43) Veröffentlichungstag der Anmeldung: **07.05.2008**
(21) Anmeldenummer: 06126325.7
(22) Anmeldetag: 18.12.2006
(51) Int. Cl.: C01B 15/01, C01B 13/02, C01B 3/04, C01B 17/69, C01B 33/12, B60L 11/00

(54) **Bereitstellung von H2O2 aus Schwefelsäure, die beim Verbrennen von fossilen Brennstoffen aus darin enthaltenen Schwefelrückständen entsteht, und Verwendung des H2O2 als Energieträger**

(30) Priorität: 29.10.2006 EP 06022578
(71) Anmelder: Silicon Fire AG, 6045 Meggen (CH)
(72) Erfinder: Krass, Florian, 6353 Weggis (CH)
(74) Vertreter: OK pat AG

(57) **Zusammenfassung**

Die Rohölvorräte sind berechenbar zeitlich begrenzt. Bevor etwa die Autoindustrie, die Luftfahrt, die Waffenindustrie und die Raumfahrt ihre Verbrennungsmaschinen auf Silane umstellen, kommt bevorzugt Wasserstoffperoxid als Energieträger zum Einsatz. Das Wasserstoffperoxid kann gemäss Erfindung besonders vorteilhaft aus einem Kraftwerksprozess gewonnen werden, bei dem mit Schwefel verunreinigte Kohlenwasserstoffe zur Verbrennung gelangen. Die Erfindung betrifft auch ein neuartiges System zum Transport/Befördern von Wasserstoffperoxid.

## Beschreibung

Diese Anmeldung beansprucht die Priorität der Anmeldung Europäischen Patentanmeldung EP 06 022 578.6, die am 29.10.2006 beim EPA eingereicht wurde.

Kohlenstoffdioxid (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen unter ausreichendem Sauerstoff. Seit Beginn der Industrialisierung steigt der CO₂-Anteil in der Atmosphäre deutlich an. Hauptursache hierfür sind die vom Menschen verursachten - die sogenannten anthropogenen - CO₂-Emissionen.

Das Kohlendioxid in der Atmosphäre absorbiert einen Teil der Wärmestrahlung. Diese Eigenschaft macht Kohlendioxid zu einem so genannten Treibhausgas und ist einer der Mitverursacher des Treibhauseffekts.

Aus diesen und auch aus anderen Gründen wird zur Zeit in verschiedenste Richtungen geforscht und entwickelt, um einen Weg zu finden, um die anthropogenen CO₂-Emissionen zu reduzieren. Besonders im Zusammenhang mit der Energieerzeugung, die häufig durch das Verbrennen fossiler Energieträger, wie Kohle oder Gas, erfolgt, aber auch bei anderen Verbrennungsprozessen, zum Beispiel bei der Müllverbrennung, besteht ein grosser Bedarf zur CO₂ Reduktion. Es werden pro Jahr hunderte von Millionen Tonnen CO₂ durch solche Prozesse in die Atmosphäre abgegeben.

Die zur Erzeugung von Wärme benötigten Verbrennungsstoffe erzeugen, wie eingangs erläutert, CO₂. Bisher ist niemand auf die Idee gekommen, den in ölhaltigen Sanden (SiO₂), ölhaltigen Schiefern (SiO₂ + [CO₃]²), in Bauxit oder teerhaltigen Sanden oder Schiefern, und anderen Gemischen vorhandenen Sand zu nutzen, um einerseits den CO₂ Ausstoss zu reduzieren und um andererseits aus den Produkten eines solchen neuartigen Verfahrens neue Rohstoffe zu gewinnen.

Anstatt natürlich vorkommende Gemische aus Sand und Öl in diesem neuartigen Verfahren einzusetzen, können auch kohlenwasserstoffhaltige industrielle oder natürliche Abfälle, eventuell nach Vermengung mit Sand, eingesetzt werden.

Es ist auch denkbar, statt des Ölanteils natürlichen Asphalt (auch Erdpech genannt) einzusetzen. Besonders bevorzugt ist ein Gemisch aus Asphalt mit reinem Sand oder mit Bauschutt, der Sandanteile enthält.

Es kann aber auch sogenanntes Wasserglas, eine Mischung aus Sand mit Säure oder Lauge, eingesetzt werden, wobei das Wasserglas mit mineralischen Ölen versetzt wird, um den für die Erfindung notwendigen Kohlenwasserstoffanteil zu liefern (Mikroemulsionsverfahren).

Die Vorräte an ölhaltigen Sanden (SiO₂) und Schiefern (SiO₂ + [CO₃]²) übersteigen bekanntlich die Weltölvorräte um ein Mehrfaches. Die zur Anwendung kommenden technischen Verfahren, Öl und Minerale zu trennen, sind gegenwärtig uneffektiv und zu teuer. Natürlicher Asphalt kommt an mehreren Stellen der Erde vor, wird aber im kommerziellen Massstab zur Zeit hauptsächlich in Trinidad abgebaut.

Sand ist ein natürlich vorkommendes, unverfestigtes Sedimentgestein und kommt in mehr oder weniger großer Konzentration überall auf der Erdoberfläche vor. Ein Großteil der Sandvorkommen besteht aus Quarz (Siliziumdioxid; SiO₂).

Ein weiteres Problem heutiger Kraftwerksprozesse, die auf der Verbrennung von Kohlenwasserstoffen basieren, ist die entstehende Schwefelsäure, die aus Schwefelverunreinigungen der Kohlenwasserstoffe entsteht. Es gibt zwar Verfahren, um die Schwefelsäure in den Rauchgasen in den Griff zu bekommen, diese Entschwefelungsprozesse sind jedoch aufwendig und teuer.
Weiterhin wird heute vermehrt auf Wasserstoff und auf Brennstoffzellen gesetzt.

Wie hinlänglich bekannt ist, ist die Handhabung des Wasserstoffs jedoch nicht unproblematisch und der Transport ist bis heute nicht zufriedenstellend gelöst.

Aufgabe der vorliegenden Erfindung ist es, solche möglichen Rohstoffe zu benennen und ihre technische Darstellung zu beschreiben. Die beim Verfahren zum Einsatz kommenden chemischen Überlegungen sind dadurch gekennzeichnet, dass sowohl die in den Sanden und Schiefern und anderen Gemischen vorhandenen Kohlenwasserstoffe an einer Reaktion teilnehmen, sowie auch das SiO₂ reaktionstechnisch chemisch verändert wird.

Andererseits ist es eine Aufgabe alternative Lösungsansätze für das Erzeugen von Energie und für den gefahrenlosen Transport von Energie anzubieten.

Die Erfindung nutzt unter anderem die Tatsache, dass Silizium (z.B. als Pulver bei geeigneter Temperatur) nach Zündung direkt mit reinem (kaltem) Stickstoff (z.B. Stickstoff aus der Umgebungsluft) zu Siliziumnitrid umgesetzt werden kann, weil die Reaktion stark exotherm ist. (Si₃N₄ ist ein festes Edelgas [Plichta].) Die hierbei anfallende Wärme kann in Reaktoren zum Einsatz kommen.

Das je nach Verfahren in Kraftwerksprozessen auf Ölsand, Ölschiefer, Bauxit entstehende Silizium ist oberflächenaktiv und könnte katalytisch (z.B. mit Magnesium und/oder Aluminium als Katalysator) mit Wasserstoff behandelt werden, wobei Monosilan entsteht. Dieses Monosilan kann dem Reaktionsraum entnommen werden und an anderer Stelle ein weiteres Mal einer katalytischen Druckreaktion unterzogen werden. Hier lassen sich nach der Gleichung

Si + SiH₄→ (mit Kat wie Pt o.a.) → Si(SiH₄₄)+ SiHₙ(SiH₄)ₘ + SiₙHₘ

längerkettige Silane darstellen, die sowohl in der Technik der Brennstoffzelle oder bei Motoren zur Anwendung kommen können.

Das Silizium aber auch die Silane sind hervorragende Energielieferanten, die problemlos zu einem Verbraucher befördert werden können. Besser geeignet ist jedoch Wasserstoffperoxid als Energielieferant. Das Wasserstoffperoxid kann in einem Prozess erzeugt werden, der an einen fossilen Kraftwerksprozess angekoppelt oder in einen solchen Prozess integriert ist. Das gleiche gilt auch für die Herstellung von Silizium oder Silanen, die auch in einen solchen Porzess integriert oder an einen solchen Prozess gekoppelt werden kann.

Weitere Einzelheiten und Vorteile der Erfindung werden im Folgenden anhand von Ausführungsbeispielen beschrieben.

### Detaillierte Beschreibung

Im Folgenden wird die Erfindung anhand von Beispielen beschrieben. Ein erstes Beispiel bezieht sich auf die Anwendung der Erfindung in einem Kraftwerksbetrieb, um dort den bei der Energiegewinnung anfallenden CO₂-Ausstoss zu reduzieren oder ganz zu eliminieren.

Gemäss Erfindung geht es um eine Reihe von gezielt ablaufenden chemischen Reaktionen, bei denen aus den Ausgangsstoffen (auch Edukte oder Reaktanten genannt) neue chemische Verbindungen (Produkte genannt) entstehen. Die erfindungsgemässen Reaktionen des eingangs als Hauptprozesses bezeichneten Verfahrens sind so ausgelegt, dass CO₂ in deutlichen Mengen verbraucht und/oder gebunden wird.

Als Ausgangstoff eingesetzt wird in einem ersten Ausführungsbeispiel zum Beispiel Sand, der mit Mineralöl versetzt ist, oder Ölschiefer. Diese Ausgangsstoffe werden einer Reaktionskammer, zum Beispiel in Form eines Nachbrenners oder einer Brennkammer, zugeführt. In diese Kammer wird CO₂ eingeblasen. Dieses CO₂ kann in dem ersten Ausführungsbeispiel das CO₂-Abgas sein, das bei der Energiegewinnung aus fossilen Brennstoffen in grossen Mengen anfällt und bisher in vielen Fällen in die Atmosphäre entweicht. Zusätzlich wird der Kammer (Umgebung-)Luft zugeführt. Anstatt der Umgebungsluft, oder zusätzlich zur Umgebungsluft kann dem Verfahren Dampf oder hyperkritisches H₂O bei über 407° C zugeführt werden.

Weiterhin ist das Einblasen von Stickstoff an anderer Stelle im Verfahren, respektive der Brennkammer vorzusehen.

Ausserdem kommt eine Art Katalysator zum Einsatz. Besonders geeignet ist Aluminium. Unter geeigneten Umgebungsbedingungen findet in der Kammer eine Reduktion statt, die wie folgt stark vereinfacht dargestellt werden kann:

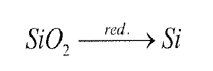

Dass heisst, es wird der im Sand oder Schiefer vorhandene Quarzanteil umgewandelt in kristallines Silizium.

Das zum Einsatz kommende Mineralöl der Sande übernimmt die Rolle des Primärenergielieferantens und wird im erfindungsgemässen Verfahren selber pyrolytisch bei Temperaturen über 1000 Grad Celsius weitgehend in Wasserstoff (H₂) und eine graphitähnliche Masse zerlegt. Es wird also bei den ablaufenden Reaktionen der Kohlenwasserstoffkette des Mineralöls der Wasserstoff entzogen. Der Wasserstoff kann zum Beispiel in Rohrleitungssysteme der Erdgasindustrie abgeleitet oder in Wasserstofftanks gespeichert werden.

In einem zweiten Ausführungsbeispiel wird die Erfindung im Zusammenhang mit einem Pyrolyseverfahren der Firma Pyromex AG, Schweiz, angewendet.
Die vorliegende Erfindung kann aber auch als Ergänzung oder Alternative zu dem sogenannten Oxyfuel-Verfahren eingesetzt werden. So kann zum Beispiel mittels der vorliegenden Erfindung eine Energie-Kaskaden-Wärmegewinnung nach folgendem Ansatz durchgeführt werden. In Abwandlung des Oxyfuel-Verfahrens wird unter Zugabe von Aluminium, vorzugsweise von flüssigem Aluminium, und unter Verbrennung von Ölsand (statt Öl oder Kohle) mit Sauerstoff (O₂) und je nach Bedarf auch Stickstoff (N₂) zusätzliche Hitze erzeugt (Wackerunfall). Im Bedarfsfall der Stickstoffkopplung an Siliziumverbindungen wird vorzugsweise die reine Stickstoffatmosphäre aus Umgebungsluft durch (aus der Propannitrierung bekannten) Verbrennung des Sauerstoffanteils der Luft mit Propangas erreicht.

Gemäss Erfindung kann Aluminium (Al) zum Einsatz kommen. Eine wirtschaftliche Gewinnung von Aluminium ist zur Zeit nur aus Bauxit möglich. Bauxit enthält ca. 60 Prozent Aluminiumoxid (Al₂O₃), ca. 30 Prozent Eisenoxid (Fe₂O₃), Siliziumoxid (SiO₂) und Wasser. D.h., das Bauxit ist typischerweise stets mit dem Eisenoxid (Fe₂O₃) und dem Siliziumoxid (SiO₂) verunreinigt.

Al₂O₃ lässt sich wegen der extrem hohen Gitterenergie nicht auf chemischem Wege reduzieren. Technisch gelingt die Herstellung von Aluminium aber durch die Schmelzflusselektrolyse (Kryolith-Tonerde-Verfahren) von Aluminiumoxid Al₂O₃. Das Al₂O₃ wird zum Beispiel durch das Bayer-Verfahren gewonnen. Beim Kryolith-Tonerde-Verfahren wird das Aluminiumoxid mit Kryolith (Salz: Na₃[AlF₆]) geschmolzen und elektrolysiert. Um nicht bei hohen Schmelztemperaturen des Aluminiumoxids von 2000°C arbeiten zu müssen, wird das Aluminiumoxid in einer Schmelze von Kryolith gelöst. Im Verfahren liegt damit die Arbeitstemperatur nur bei 940 bis 980°C.

Bei der Schmelzflusselektrolyse entsteht an der Kathode flüssiges Aluminium und an der Anode Sauerstoff. Als Anoden kommen Kohleblöcke (Graphit) zum Einsatz. Dieses Anoden brennen durch den entstehenden Sauerstoff ab und müssen dauern erneuert werden.

Es wird als ein wesentlicher Nachteil des Kryolith-Tonerde-Verfahrens angesehen, dass er wegen der hohen Bindungsenergie des Aluminiums sehr energieaufwändig ist. Problematisch für die Umwelt ist die teilweise stattfindende Bildung und Emission von Fluor.

Beim erfindungsgemässen Verfahren kann das Bauxit dem Verfahren zugefügt werden, um eine Kühlung des Prozesses zu erreichen. Durch das Bauxit kann man die überschüssige Wärmeenergie im System in den Griff bekommen. Dies geschieht analog zu dem Verfahren, wo einer Eisenschmelze in einem Hochofen Eisenschrott zur Kühlung zugeführt wird, wenn die Eisenschmelze zu heiß wird.

Hilfsweise kann Kryolith eingesetzt werden, falls das Verfahren ausser Kontrollen zu geraten droht (siehe Wacker Unfall), um so im Sinne einer Notkühlung die Temperatur im System zu reduzieren.

Ebenso wie Siliziumcarbid ist Siliziumnitrid ein verschleißfester Werkstoff der bei hochbeanspruchten Teilen im Maschinenbau, Turbinenbau, chemischen Apparaturen, Motorenbau eingesetzt werden kann oder wird.

Weitere Details zu den beschriebenen chemischen Abläufen und Energieprozessen sind den folgenden Seiten zu entnehmen.

Quarzsand lässt sich mit flüssigem Aluminium gemäss dem Lehrbuch Holleman-Wiberg exotherm zu Silizium und Aluminiumoxid umsetzen:

3 SiO₂ + 4 Al (I) → 3 Si + 2 Al₂O₃ ΔH = - 618.8 kJ/Mol

(exotherm)

Silizium verbrennt mit Stickstoff zu Siliziumnitrid bei 1350°C. Die Reaktion ist wiederum exotherm

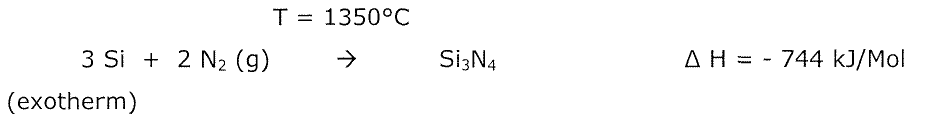

Silizium reagiert mit Kohlenstoff leicht exotherm zu Siliziumcarbid.

Si + C → SiC Δ H = - 65.3 kJ/Mol

(exotherm)

Andererseits lässt sich Siliziumcarbid direkt aus Sand und Kohlenstoff bei rund 2000°C endotherm gewinnen:

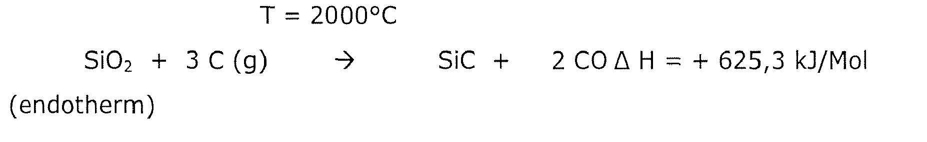

Um aus dem Nebenprodukt Bauxit resp. Aluminiumoxid Al₂O₃ wieder Aluminium zurückzugewinnen, elektrolysiert man flüssiges Al₂O₃ (Schmelzpunkt 2045°C) ohne Kryolithzugabe zu Aluminium und Sauerstoff. Die Reaktion ist stark endotherm und wird zur Kühlung der exothermen Reaktionen herangezogen.

2 Al₂O₃ (I) → 4 Al (I) + 3 O₂ (g) Δ H = +1676,8 kJ/Mol

(endotherm)

### Herstellung der Silane:

Magnesium reagiert mit Silizium zu Magnesiumsilicid:

2 Mg + Si → Mg₂Si

Magnesiumsilicid reagiert mit Salzsäure zu Monosilan SiH4 und Magnesiumchlorid:

Mg₂Si + 4 HCl (g) → SiH₄ + 2 MgCl₂

Dieser Syntheseweg müsste eigentlich auch mit Aluminium funktionieren: Als Zwischenprodukt entsteht demzufolge Aluminiumsilicid Al₄Si₃.
Höhere Silane sind möglicherweise nur über die Polymerisation von SiCl₂ mit SiCl₄ und durch anschliessende Umsetzung mit LiAlH₄ zugänglich, wie die vorangegangene Arbeit dokumentiert.

Im Folgenden werden weitere wesentliche Aspekte der Erfindung beschrieben.

Wie eingangs beschrieben, sind die fossilen Brennstoffe, die in Kraftwerken verbrannt werden mit Schwefelrückständen belastet. Gemäss Erfindung kann nun H₂O₂ als Energieträger in einem auf fossilen Brennstoffen basierenden Kraftwerksprozess bereit gestellt werden. Dabei werden Schwefelverbindungen aus dem Kraftwerksprozess mit Wasser und/oder Wasserdampf zusammengebracht, um so Schwefelsäure (H₂SO₄) zu erzeugen. Die Schwefelsäure wird durch Stromzufuhr an einer Elektrode (Anode) zu Peroxoschwefelsäure umgesetzt. Durch einen Hydrolyseprozess wird die Peroxoschwefelsäure in Schwefelsäure und H₂O₂ zerlegt. Die Peroxoschwefelsäure hydrolysiert in Wasser relativ schnell zu H₂O₂ und Schwefelsäure, wie in der folgenden Reaktion vereinfacht dargestellt:

H₂SO₅ + H₂O → H₂SO₄ + H₂O₂

In der vorliegenden Anmeldung und in den Ansprüchen wird der Begriff Peroxoschwefelsäure verwendet für H₂SO₅, für H₂S₂O₈ (auch Peroxodischwefelsäure genannt) und auch für ein Gemisch aus H₂SO₅ und H₂S₂O₈.

Gemäss Erfindung wird die Schwefelsäure dann abgetrennt, um so eine Lösung aus H₂O₂ mit Wasser bereit zu stellen.

Da reines (= wasserfreies) H₂O₂ instabil ist und spontan explodieren kann, z.B. wenn es mit Metallen in Berührung kommt, gelangt es gemäss Erfindung in maximal siebzigprozentiger Lösung in Wasser (in wässriger Lösung) in den Umlauf. Dieser Grenzwert von 70% wird hier als kritische Konzentrationsgrenze bezeichnet.

Die Lösung wird gemäss Erfindung so gewählt, dass die Konzentration von H₂O₂ unterhalb der kritischen Konzentrationsgrenze liegt. Dann erfolgt der Transport dieser Lösung zu einem Verbraucher (Tankstelle, Endverbraucher). Durch Abspalten von Wasserstoff und/oder Sauerstoff aus der Lösung kann beim Verbraucher durch Verwenden des Wasserstoffs und/oder Sauerstoffs als Energielieferant und/oder Treibstoff Energie erzeugt werden.

Beim Umsetzen zu Peroxoschwefelsäure wird vorzugsweise Sauerstoff eingesetzt, der entweder aus der (Umgebungs-)Luft, aus CO₂-Abgas des Kraftwerksprozess, oder aus einem Siliziumdioxid-Reduktionsprozess entnommen wird, wie weiter oben beschrieben.

Das H₂O₂ eignet sich besonders gut als Energielieferant oder Kraftstoff. Das H₂O₂ kann problemlos als Lösung zu einem Verbraucher durch ein Leitungssystem, insbesondere ein bereits vorhandenes Wasserleitungssystem, gefördert werden. Dies ist absolut ungefährlich, da es in einer Konzentration unter 70% vorliegt. Die Durchleitung der Lösung durch das Leitungssystem macht dieses keimfrei, was besonders in warmen Gegenden und in Bereichen mit ansonsten nicht keimfreiem Wasser wichtig sein kann. Man macht sich also zu Nutzen, dass das H₂O₂ desinfizierend wirkt.

Durch ein bereits vorhandenes Leitungssystem können gemäss Erfindung einerseits Trinkwasser und andererseits H₂O₂ als Energielieferant über längere Distanzen gemeinsam transportiert werden. Besonders geeignet sind Rohre, die innen eine dünne Beschichtung (z.B. mit Kunststoff) aufweisen, um die leicht saure Lösung besser führen zu können. Besonders geeignet ist eine dünne Teflon- oder Nylon-Beschichtung. Oder es können Kunststoffrohre eingesetzt werden.

Der Transport dieser Lösung zu einem Verbraucher kann aber auch durch ein Transportfahrzeug erfolgen, wobei dieser Transport vorzugsweise drucklos oder bei niedrigem Druck erfolgt.

Die H₂O₂ Lösung kann auch an einer Tankstelle zur weiteren Verwendung bereitgestellt werden.

Am Ort des Verbrauchs kann das H₂O₂ aus der Lösung mit Silizium zur Reaktion gebracht werden (zum Beispiel in einem Reaktor oder Ofen), um somit SiO₂ und Wasser zu erzeugen, wobei diese Reaktion Energie frei setzt.

Am Ort des Verbrauchs kann aber auch das Abspalten von Wasserstoff und/oder Sauerstoff aus der Lösung katalytisch erfolgen.

Besonders bevorzugt ist ein Ansatz, bei dem das Leitungssystem selbstheilend ausgelegt ist. Bei geeigneter Auslegung können Haarrisse, Defekte oder Rohrbrüche des Leitungssystems zu einer Anreicherung der Lösung in der Wandung des Leitungssystems oder ausserhalb desselben führen. Dort kann die Lösung durch einen Polymerisierungsprozess (zum Beispiel mit PU oder durch ein Wasserstoffperoxid-basiertes Propylenoxid-Verfahren) zu einer automatischen Abdichtung, Heilung oder Reparatur eingesetzt werden. So können zum Beispiel alternde Rohre weiterhin verwendet werden. Ausserdem werden aufgrund der desinfizierenden Wirkung lokale Nester von Verunreinigungen und Bakterien abgetötet.

In einer weiteren Ausführungsform wird ein kleiner Anteil des H₂O₂ aus der H₂O₂ Lösung dem Abwassersystem zugeführt, um das Abwasser zumindest teilweise aufzubereiten. Einerseits kommt auch hier die desinfizierende Wirkung zu Einsatz. Andererseits fördert das H₂O₂ die Zersetzung natürlicher Abfälle und anderer Substanzen.

Das H₂O₂kann beim Verbraucher auch mit kohlenwasserstoffhaltigen Substanzen, zum Beispiel biologisch Substanzen wie Zucker, vermischt werden, um den Brennwert zu erhöhen. Es können aber auch Exkremente mit H₂O₂ versetzt werden, um sie dann einem Verbrennungsprozess zuzuführen. Auch hierdurch kann Energie gewonnen werden.

Beim Verbraucher kann H₂O₂ mit einer Konzentration kleiner als 15% bereit gestellt werden, um dort zum Beispiel als Desinfektions- und/oder Reinigungs-und/oder Wasch- und oder Spülmittel zu dienen. Durch Zugabe in eine Wasch-oder Spülmaschine können die bisherigen Reinigungsmittel reduziert oder ganz weggelassen werden.

Beim Verbraucher kann das H₂O₂ aber auch mit einer erhöhten Konzentration bereit gestellt werden, was durch Entziehen des Wassers aus der Lösung geschieht.

Gemäss Erfindung können neuartige Fernenergielieferungssysteme bereit gestellt werden, die mindestens zum Teil die Stromleitungen ersetzen werden. Ein solches Fernenergielieferungssystem umfasst Leitungssysteme, die eine wässerige Lösung von H₂O₂ von einem Energielieferanten (zum Beispiel einem Kraftwerk) zu einem Verbraucher liefern, wobei in der Lösung die Konzentration von H₂O₂ unterhalb der kritischen Konzentrationsgrenze liegt.

Besonders vorteilhaft ist eine Ankopplung dieses Fernenergielieferungssystems an einen Kraftwerksbetrieb, in dem ein auf fossilen Brennstoffen basierender Kraftwerksprozess abläuft und wo aus dem Schwefel das H₂O₂ gewonnen wird. Das Fernenergielieferungssystem kann auch an einen Kraftwerksbetrieb gekoppelt werden, in dem ein auf einer kohlenwasserstoffhaltigen Siliziumdioxidverbindung basierender Kraftwerksprozess abläuft.

Vorzugsweise umfasst das Fernenergielieferungssystem einen Reaktor oder Ofen, der am Ort des Verbrauches angeordnet ist und H₂O₂ aus der Lösung mit Silizium zur Reaktion bringt, um somit SiO₂ und Wasser zu erzeugen, wobei diese Reaktion grosse Mengen Energie frei setzt.

Das Fernenergielieferungssystem kann auch einen Katalysator umfassen, der am Ort des Verbrauches angeordnet ist und das Abspalten von Wasserstoff und/oder Sauerstoff aus der Lösung katalytisch vollzieht.

Das Fernenergielieferungssystem kann auch so ausgelegt sein, dass beim Auftreten von Haarrissen, Defekten oder Rohrbrüchen des Leitungssystems es zu einer Anreicherung der Lösung in der Wandung oder ausserhalb desselben kommt, wobei die Lösung dort durch einen Polymerisierungsprozess (zum Beispiel mit PU) zu einer automatischen Abdichtung, Heilung oder Reparatur führt.

Die Erfindung kann aber auch in einem Kraftwerksprozess eingesetzt werden, bei dem eine kohlenwasserstoffhaltige Siliziumdioxidverbindung (z.B. Ölsand, Ölschiefer, mit Siliziumdioxid verschmutztes Bauxit) in eine Brennzone erfolgt. Dann wird das Siliziumdioxid aus der kohlenwasserstoffhaltigen Siliziumdioxidverbindung mit flüssigem oder pulverförmigem Aluminium, oder mit Halogenverbindungen, in Silizium (Si₂) und/oder in Silane umgewandelt. Dann erfolgt der Transport des Siliziums und/oder der Silane zu einem Verbraucher. Dort werden das Silizium und/oder die Silane als Energielieferant durch Oxidation mit Sauerstoff und/oder durch Nitrierung mit Stickstoff und/oder Karbonisierung mit Kohlenstoff eingesetzt. In diesem Fall wird also statt des Wasserstoffperoxids Silizium oder es werden Silane als Energielieferanten eingesetzt.

Gemäss Erfindung lassen sich auch Fahrzeuge mit einem neuartigen Hybridantrieb realisieren. Bei dieser Antriebsart wird Wasserstoff aus einem Silanöl (höherkettige Silizium-Wasserstoffverbindung) in einer Brennstoffzelle eingesetzt, die das Fahrzeug speist. Der durch die Brennstoffzelle erzeugte Strom kann einen Elektromotor antreiben. Gleichzeitig oder alternativ dazu wird Abwärme aus einer Reaktion von Silizium mit Sauerstoff aus dem H₂O₂ in einer Reaktorzelle als weiterer Energielieferant des Fahrzeugs eingesetzt. Dieses H₂O₂ kann zum Beispiel zusammen mit dem Silanöl an einer Tankstelle aufgenommen werden. Zu diesem Zweck weist das Fahrzeug vorzugsweise zwei getrennte Tanks auf.

Die bisherigen großtechnischen Herstellungsmethoden für H₂O₂ sind sehr energieaufwendig und kostenintensiv. Der hierin präsentierte neue Ansatz kann als Basis für ein wesentlich ökonomischeres Verfahren zur Herstellung von H₂O₂ dienen.

## Patentansprüche

1. Verfahren zur Bereitstellung von H₂O₂ als Energieträger in einem auf fossilen Brennstoffen basierenden Kraftwerksprozess,
mit den Schritten:
- Schwefelverbindungen aus dem Kraftwerksprozess mit Wasser und/oder Wasserdampf zusammenbringen, um so Schwefelsäure zu erzeugen,
- Schwefelsäure durch Stromzufuhr an einer Elektrode zu Peroxoschwefelsäure umsetzen,
- durch Hydrolyse zerlegen der Peroxoschwefelsäure in Schwefelsäure und H₂O₂,
- Abtrennen der Schwefelsäure und Bereitstellen einer Lösung aus H₂O₂ mit Wasser, so dass die Konzentration von H₂O₂ unterhalb der kritischen Konzentrationsgrenze liegt,
- Transport dieser Lösung zu einem Verbraucher,
- Abspalten von Wasserstoff und/oder Sauerstoff aus der Lösung beim Verbraucher,
- Verwenden des Wasserstoffs und/oder Sauerstoffs als Energielieferant und/oder Treibstoff.

2. Verfahren nach Anspruch 1, **dadurch gekennzeichnet, dass** beim Umsetzen zu Peroxoschwefelsäure Sauerstoff eingesetzt wird, der entweder aus der Luft, aus CO2-Abgas des Kraftwerksprozess, oder aus einem Siliziumdioxid-Reduktionsprozess entsteht.

3. Verfahren nach Anspruch 1 oder 2, **dadurch gekennzeichnet, dass** der Transport dieser Lösung zu einem Verbraucher durch ein Leitungssystem, insbesondere ein bereits vorhandenes Wasserleitungssystem, erfolgt.

4. Verfahren nach Anspruch 1 oder 2, **dadurch gekennzeichnet, dass** der Transport dieser Lösung zu einem Verbraucher durch ein Transportfahrzeug erfolgt, wobei dieser Transport vorzugsweise drucklos oder bei niedrigem Druck erfolgt.

5. Verfahren nach Anspruch 3 oder 4, **dadurch gekennzeichnet, dass** diese Lösung an einer Tankstelle zur weiteren Verwendung bereitgestellt wird.

6. Verfahren nach einem der vorhergehenden Ansprüche, **dadurch gekennzeichnet, dass** am Ort des Verbrauches H₂O₂ aus der Lösung mit Silizium zur Reaktion gebracht wird, um somit SiO₂ und Wasser zu erzeugen, wobei diese Reaktion Energie frei setzt.

7. Verfahren nach einem der vorhergehenden Ansprüche, **dadurch gekennzeichnet, dass** das Abspalten von Wasserstoff und/oder Sauerstoff aus der Lösung katalytisch erfolgt.

8. Verfahren nach Anspruch 3, **dadurch gekennzeichnet, dass** beim Durchleiten der Lösung durch das Leitungssystem dieses keimfrei gemacht wird.

9. Verfahren nach Anspruch 3, **dadurch gekennzeichnet, dass** Haarrisse, Defekte oder Rohrbrüche des Leitungssystems zu einer Anreicherung der Lösung in der Wandung des Leitungssystems oder ausserhalb desselben führt, wobei die Lösung dort durch einen Polymerisierungsprozess (zum Beispiel mit PU) zu einer automatischen Abdichtung, Heilung oder Reparatur führt.

10. Verfahren nach Anspruch 3, **dadurch gekennzeichnet, dass** durch das Leitungssystem einerseits Trinkwasser und andererseits H₂O₂ als Energielieferant über längere Distanzen transportierbar ist.

11. Verfahren nach Anspruch 3, **dadurch gekennzeichnet, dass** mindestens ein kleiner Anteil des H₂O₂ aus der H₂O₂ Lösung dem Abwassersystem zugeführt wird, um das Abwasser zumindest teilweise aufzubereiten.

12. Verfahren nach Anspruch 3 oder 4, **dadurch gekennzeichnet, dass** H₂O₂ beim Verbraucher mit kohlenwasserstoffhaltigen Substanzen, zum Beispiel biologisch Substanzen wie Zucker, vermischt wird.

13. Verfahren nach Anspruch 3, **dadurch gekennzeichnet, dass** beim Verbraucher H₂O₂ mit einer Konzentration kleiner als 15% bereit gestellt wird, um dort zum Beispiel als Desinfektions- und/oder Reinigungs-und/oder Wasch- und/oder Spülmittel zu dienen.

14. Verfahren nach Anspruch 3 oder 13, **dadurch gekennzeichnet, dass** beim Verbraucher H₂O₂ mit einer erhöhten Konzentration bereit gestellt wird, was durch Entfernen des Wassers aus der Lösung geschieht.

15. Verfahren nach einem der vorhergehenden Ansprüche, **gekennzeichnet, durch** die folgenden Schritte:
- Einbringen von kohlenwasserstoffhaltiger Siliziumdioxidverbindung (z.B. Ölsand) in eine Brennzone,
- Umwandlung von Siliziumdioxid aus der kohlenwasserstoffhaltigen Siliziumdioxidverbindung mit flüssigem oder pulverförmigem Aluminium, oder mit Halogenverbindungen, in Silizium (Si₂) und/oder in Silane,
- Transport des Siliziums und/oder der Silane zu einem Verbraucher,
- Einsetzen des Siliziums und/oder der Silane als Energielieferant **durch** Oxidation mit Sauerstoff und/oder **durch** Nitrierung mit Stickstoff und/oder Karbonisierung mit Kohlenstoff oder CO2 und/oder Sulfidbildung mit Schwefel.

16. Fernenergielieferungssystem mit Leitungssystemen, die eine wässerige Lösung von H₂O₂ von einem Energielieferanten zu einem Verbraucher liefert, wobei in der Lösung die Konzentration von H₂O₂ unterhalb der kritischen Konzentrationsgrenze liegt.

17. Fernenergielieferungssystem nach Anspruch 16, **dadurch gekennzeichnet, dass** dieses an
- einen Kraftwerksbetrieb angekoppelt ist, in dem ein auf fossilen Brennstoffen basierenden Kraftwerksprozess abläuft, oder
- an einen Kraftwerksbetrieb angekoppelt ist, in dem ein auf einer kohlenwasserstoffhaltigen Siliziumdioxidverbindung basierender Kraftwerksprozess abläuft.

18. Fernenergielieferungssystem nach Anspruch 16 oder 17, **dadurch gekennzeichnet, dass** es einen Reaktor oder Ofen umfasst, der am Ort des Verbrauches angeordnet ist und H₂O₂ aus der Lösung mit Silizium zur Reaktion bringt, um somit SiO₂ und Wasser zu erzeugen, wobei diese Reaktion Energie frei setzt.

19. Fernenergielieferungssystem nach Anspruch 16, 17 oder 18, **dadurch gekennzeichnet, dass** es einen Katalysator umfasst, der am Ort des Verbrauches angeordnet ist und das Abspalten von Wasserstoff und/oder Sauerstoff aus der Lösung katalytisch erfolgt.

20. Fernenergielieferungssystem nach einem der Ansprüche 16 bis 19, **dadurch gekennzeichnet, dass** die Wandungen des Leitungssystems so ausgelegt sind, dass beim Auftreten von Haarrissen, Defekten oder Rohrbrüchen des Leitungssystems es zu einer Anreicherung der Lösung in der Wandung oder ausserhalb desselben kommt, wobei die Lösung dort durch einen Polymerisierungsprozess (zum Beispiel mit PU) zu einer automatischen Abdichtung, Heilung oder Reparatur führt.

21. Verfahren zum Antreiben eines Fahrzeugs, **dadurch gekennzeichnet, dass**
- Wasserstoff aus einem Silanöl (höherkettige Silizium-Wasserstoffverbindung) eine Brennstoffzelle das Fahrzeugs speist und der **dadurch** erzeugte Strom einen Elektromotor antreibt, und
- dass Abwärme aus einer Reaktion von Silizium mit Sauerstoff aus H₂O₂ in einer Reaktorzelle als weiterer Energielieferant des Fahrzeugs eingesetzt wird.

22. Fahrzeug mit einem Hybridantrieb, der auf einem Verfahren nach Anspruch 21 basiert.
